# EUROPÄISCHE PATENTSCHRIFT

(11) **EP 2 548 032 B1**
(45) Veröffentlichungstag und Bekanntmachung des Hinweises auf die Patenterteilung: **20.11.2013**
(21) Anmeldenummer: 11709023.3
(22) Anmeldetag: 19.01.2011
(51) Int. Cl.: G01P 15/08, G01P 15/12

(54) **PIEZORESISTIVES MIKROMECHANISCHES SENSORBAUELEMENT UND ENTSPRECHENDES MESSVERFAHREN**
PIEZORESISTIVE MICROMECHANICAL SENSOR COMPONENT AND CORRESPONDING MEASURING METHOD
MODULE DE DÉTECTEUR MICROMÉCANIQUE PIÉZO-RÉSISTIF ET PROCÉDÉ DE MESURE CORRESPONDANT

(30) Priorität: 18.03.2010 DE 102010002994
(43) Veröffentlichungstag der Anmeldung: 23.01.2013
(73) Patentinhaber: Robert Bosch GmbH, 70442 Stuttgart (DE)
(72) Erfinder: NEUL, Reinhard, 70567 Stuttgart (DE); RETTIG, Christian, 72800 Eningen U.A. (DE); TRAUTMANN, Achim, 71229 Leonberg (DE); MEISEL, Daniel Christoph, 71665 Vaihingen An Der Enz (DE); BUHMANN, Alexander, 70192 Stuttgart (DE); ENGESSER, Manuel, 77815 Buehl (DE); FEYH, Ando, Palo Alto CA 94306 (US)
(86) Internationale Anmeldenummer: PCT/EP2011/050641
(87) Internationale Veröffentlichungsnummer: WO 2011/113625

(56) Entgegenhaltungen:
- US-A- 4 776 924
- US-A- 5 395 802
- US-A1- 2007 022 814
- SHUSEN HUANG: AUS J. MICROMECH. MICROENG., Bd. 15, 2005, Seiten 993-1000, XP20091557, in der Anmeldung erwähnt

## Beschreibung

### Stand der Technik

Die vorliegende Erfindung betrifft ein piezoresistives mikromechanisches Sensorbauelement und entsprechendes Messverfahren.

Obwohl auf beliebige piezoresistive mikromechanische Sensorbauelemente anwendbar, werden die vorliegende Erfindung sowie die ihr zugrundeliegende Problematik in Bezug auf einen piezoresistiven mikromechanischen Beschleunigungssensor erläutert.

Heutige Beschleunigungssensoren werden üblicherweise kapazitiv ausgewertet. Die ebenfalls praktizierte piezoresistive Auswertung bietet allerdings ein größeres Potential im Hinblick auf die angestrebte immer weiter gehende Miniaturisierung. Prinzipiell kann bei piezoresistiv ausgewerteten Beschleunigungssensoren, hier als piezoresistive Beschleunigungssensoren bezeichnet, zwischen folgenden beiden Varianten unterschieden werden.

Eine Variante besteht in einer strukturierten Dotierung, wobei Piezowiderstände an den Stellen auf einem Biegebalken eindotiert werden, an denen die maximale mechanische Spannung bei Auslenkung auftritt.

Die andere Variante besteht in einer homogenen Dotierung, wobei der gesamte homogen dotierte Biegebalken zur Auswertung herangezogen wird. Dazu wird eine homogen verteilte mechanische Spannung im Balken benötigt. Da bei der homogenen Dotierung der gesamte Biegebalken zur Auswertung genutzt wird, bietet die homogene Dotierung Vorteile mit Hinblick auf die Miniaturisierung.

Die US 4,776,924 A offenbart ein Verfahren zur Herstellung eines Dehnmessstreifens mit Piezowiderstand

Die US 5,395,802 A offenbart einen halbleiterbasierten Beschleunigungssensor.

Die US 2007/0022814 A1 offenbart einen halbleiterbasierten Sensor mit einem Piezowiderstand.

Aus J. Micromech. Microeng. 15 (2005), Seiten 993 - 1000 (Shusen Huang et al.) ist ein piezoresistiver mikromechanischer Beschleunigungssensor mit homogen dotierten Biegebalken bekannt.

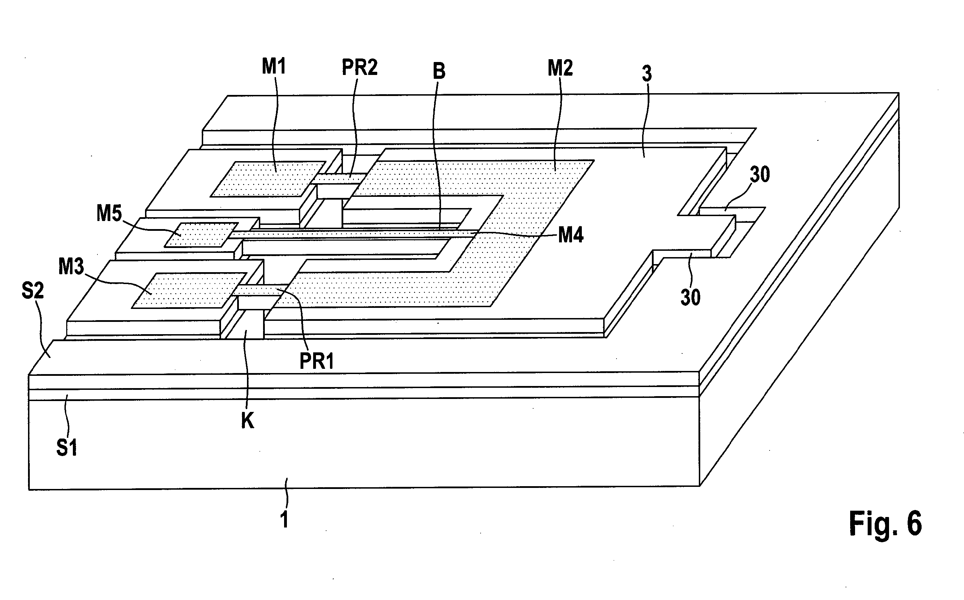

Fig. 6 ist eine perspektivische Ansicht dieses bekannten piezoresistiven mikromechanischen Beschleunigungssensors.

In Fig. 6 bezeichnet Bezugszeichen 1 ein Substrat, auf dem eine Opferoxidschicht S1 und eine Deckschicht S2 vorgesehen sind. Herausstrukturiert aus der Deckschicht S2 ist eine seismische Masse 3, welche über einen undotierten Biegebalken B an dem Substrat 1 verankert ist. An der Spitze der seismischen Masse 3 ist ein Anschlag 30 vorgesehen, welcher die seismische Masse 3 vor zu großen Auslenkungen schützt. Unter der seismischen Masse 3 und dem Biegebalken B liegt eine Kavität K.

Neben dem Biegebalken B ist die seismische Masse 3 über zwei homogen dotierte piezoresistive Balken PR1, PR2 mit dem Substrat verbunden. Zur Erfassung einer Widerstandsänderung der piezoresistiven Balken PR1, PR2 bei Auslenkung der seismischen Masse 3 in der Substratebene sind Metallisierungsbereiche M1, M2, M3, M4, M5 vorgesehen, welche derart mit dem piezoresistiven Balken PR1, PR2 verschaltet sind, dass sie eine Halbbrückenauswertung ermöglichen.

Zur Signalrückführung von der seismischen Masse 3 zum Substrat 1 wird in dieser Schaltungsanordnung unverzichtbar der Biegebalken B zusätzlich zu den piezoresistiven Balken PR1, PR2 benötigt. Der zusätzliche Biegebalken B verringert allerdings die mechanische Sensitivität und/oder erhöht den Prozessaufwand hinsichtlich der benötigten Gräben, wenn ansonsten von gleichen Anforderungen ausgegangen wird. Insbesondere wird zwischen den Balken PR1, B, PR2 eine möglichst schmale Grabenisolation (STI) benötigt, die einen erhöhten Prozessaufwand bedeutet.

### Vorteile der Erfindung

Das erfindungsgemäße piezoresistive mikromechanische Sensorbauelement nach Anspruch 1 und das entsprechende Messverfahren nach Anspruch 11 weisen gegenüber den bekannten Lösungsansätzen den Vorteil auf, dass ein vereinfachter kostengünstigerer Aufbau ermöglicht wird, der eine weitergehende Miniaturisierung ermöglicht.

Die der vorliegenden Erfindung zugrundeliegende Idee liegt in der Verwendung einer strukturierten Leiterbahnschicht, z. B. einer metallischen Schicht, zur elektrischen Rückführung des Messsignals auf der Oberseite des bzw. der piezoresistiven Balken.

Auch die elektrische Auswertung bei dem erfindungsgemäßen piezoresistiven mikromechanischen Sensorbauelement ist mit verschiedenen Vorteilen verbunden. Die auf der Oberseite der piezoresistiven Balken vorgesehene Leiterbahn bzw. Rückleitung stellt im Vergleich zu einer Rückleitung im dotierten Balken einen geringeren parasitären Widerstand dar. Die Widerstandsänderung kann in jedem piezoresistivem Balken separat ausgewertet werden. Dies ermöglicht eine stromlose Spannungsmessung (3-Punkt- und 4-Punkt-Messung), wodurch parasitäre Leitungswiderstände das Messergebnis nicht verfälschen. Eine galvanische Trennung ermöglicht eine vereinfachte differenzielle Auswerteschaltung auf Basis von Stromspiegeln. Ein derartiges Auswerteverfahren ist unempfindlich gegenüber Parametervariationen in den Schaltungen.

Als technologischer Vorteil kann angeführt werden, dass der Isolationsgraben zwischen den Balken bei gleichbleibender Empfindlichkeit breiter ausgeführt werden kann. Dies erleichtert die technologische Realisierung von piezoresistiven Beschleunigungssensoren, die auf homogener Dotierung beruhen.

In den abhängigen Ansprüchen finden sich vorteilhafte Weiterbildungen und Verbesserungen des jeweiligen Gegenstandes der Erfindung.

Gemäß einer bevorzugten Weiterbildung ist die seismische Masse über den bzw. die piezoresistiven Balken am Substrat aufgehängt. Dies bringt den Vorteil, dass die gesamte mechanische Aufhängungskonstruktion zur Detektion bzw. Auswertung verwendet werden kann. Es ermöglicht eine höhere mechanische Sensitivität bzw. einen Flächengewinn aufgrund einer möglichen kleineren seismischen Masse.

Gemäß einer weiteren bevorzugten Weiterbildung ist die seismische Masse über einen Verbindungsbalken am Substrat aufgehängt, wobei der piezoresistive Balken zwischen dem Verbindungsbalken und dem Substrat vorgesehen ist. Dies erhöht die Designfreiheit erheblich.

### Zeichnungen

Ausführungsbeispiele der Erfindung sind in den Zeichnungen dargestellt und in der nachfolgenden Beschreibung näher erläutert.

Es illustrieren:
- Fig. 1: eine Draufsicht eines piezoresistiven mikromechanischen Sensorbauelements in Form einer mikromechanischen Beschleunigungssensoranordnung gemäß einer ersten Ausführungsform der vorliegenden Erfindung;
- Fig 2a-c: Querschnitte des piezoresistiven mikromechanischen Sensorbauelement in Form einer mikromechanischen Beschleunigungssensoranordnung gemäß Fig. 1 entlang der Linien AA', BB' und CC';
- Fig. 3: eine Draufsicht eines piezoresistiven mikromechanischen Sensorbauelements in Form einer mikromechanischen Beschleunigungssensoranordnung gemäß einer zweiten Ausführungsform der vorliegenden Erfindung;
- Fig. 4: eine erste Messeinrichtung zur Erläuterung einer ersten Ausführungsform eines Messverfahrens unter Verwendung des erfindungsgemäßen piezoresistiven mikromechanischen Sensorbauelements;
- Fig. 5: eine zweite Messeinrichtung zur Erläuterung einer zweiten Ausführungsform eines Messverfahrens unter Verwendung des erfindungsgemäßen piezoresistiven mikromechanischen Sensorbauelements; und
- Fig. 6: eine perspektivische Ansicht eines bekannten piezoresistiven mikromechanischen Sensorbauelements in Form einer mikromechanischen Beschleunigungssensoranordnung.

### Beschreibung der Ausführungsbeispiele

In den Figuren bezeichnen gleiche Bezugszeichen gleiche oder funktionsgleiche Komponenten.

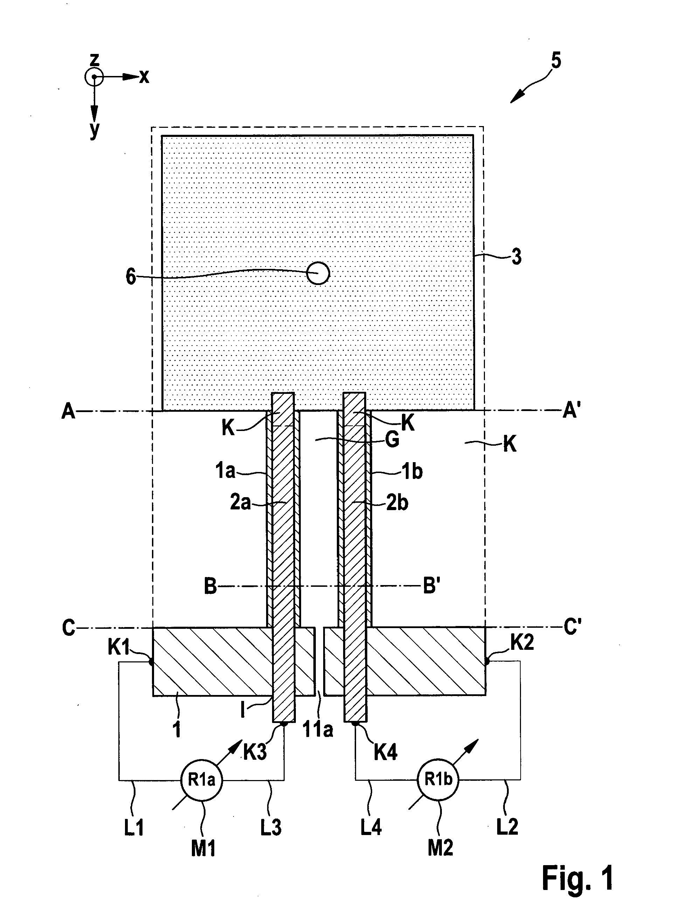

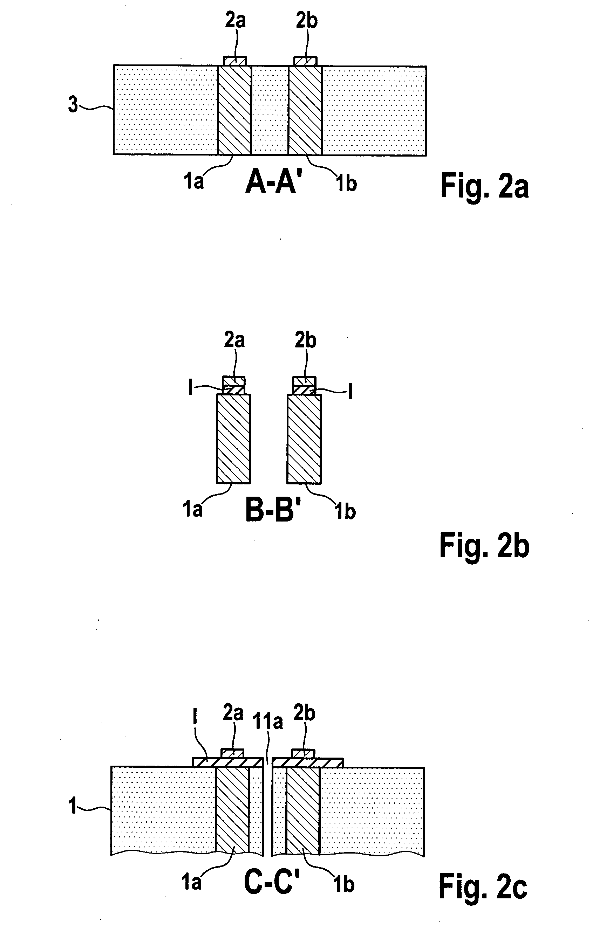

Fig. 1 ist eine Draufsicht eines piezoresistiven mikromechanischen Sensorbauelements in Form einer mikromechanischen Beschleunigungssensoranordnung gemäß einer ersten Ausführungsform der vorliegenden Erfindung, und Fig 2a-c sind Querschnitte des piezoresistiven mikromechanischen Sensorbauelements in Form einer mikromechanischen Beschleunigungssensoranordnung gemäß Fig. 1 entlang der Linien AA', BB' und CC'.

In Fig. 1 bezeichnet Bezugszeichen 5 einen piezoresistiven mikromechanischen Beschleunigungssensor. Ausgehend vom Substrat 1 erstrecken sich zwei homogen dotierte piezoresistive Balken 1 a, 1 b zur seismischen Masse 3, welche somit über diese Balken 1 a, 1 b an das Substrat 1 angebunden ist. Unter den Balken 1 a, 1 a und der seismischen Masse 3 befindet sich eine Kavität K.

Der Isolationsgraben G zwischen den piezoresistiven Balken 1 a, 1 b kann auch als schmaler Isolationsgraben (STI) ausgeführt werden. Dadurch können die Balken 1a, 1 b näher am Rotationspunkt angebracht werden, was eine Verstärkung der Hebelwirkung mit sich bringt.

Eine auf den Schwerpunkt 6 der seismischen Masse 3 einwirkende Beschleunigung in der x-y-Ebene (Substratebene) führt zu einer Stauchung des Balkens 1a und zu einer Dehnung des Balkens 1 b bzw. umgekehrt. Die homogene piezoresistive Dotierung der Balken 1a, 1 b führt dabei zu einer Änderung deren elektrischen Widerstandes. Diese Widerstandsänderung kann über Messeinrichtungen M1, M2 detektiert werden, welche den jeweiligen momentanen Widerstand der Balken 1a, 1b der mit R1a bzw. R1b bezeichnet ist, erfassen. Diese erfasste Widerstandsänderung ist somit ein Maß für die Auslenkung der seismischen Masse 3 aus ihrer Gleichgewichtsposition.

Bei der vorliegenden Ausführungsform geschieht diese Erfassung für die beiden piezoresistiven Balken 1a, 1 b separat, wozu ein Isolationsgraben 11a zur galvanischen Trennung im Substrat 1 vorgesehen ist.

Es ist weiterhin auch zu beachten, dass die beiden galvanisch getrennten Hälften des Substrats 1 mechanisch an das darunter liegende Substrat 1 angebunden sein müßen, aber elektrisch getrennt (z.B. mittels einer galvanisch isolierenden Opferschicht unterhalb des gesamten Sensors. Dabei muss beim Ätzen die Opferschicht unterhalb der Masse und Balken entfernt werden und unterhalb des Substrats 1 stehen bleiben.

Zur Erfassung der Widerstandsänderung liegt eine Reihenschaltung des Substrats 1 mit dem jeweiligen Balken 1 a bzw. 1 b und einer auf der Oberseite der Balken 1 a, 1 b vorgesehenen jeweiligen Leiterbahn 2a, 2b vor. Die Leiterbahnen 2a, 2b bedecken die Oberseite teilweise bzw. ganz und sind bei diesem Beispiel aus einer Metallschicht strukturiert. Insbesondere erstreckt sich die jeweilige Leiterbahn 2a, 2b bei dem vorliegenden Ausführungsbeispiel ausgehend von der seismischen Masse 3 über dem gesamten Balken 1 a, 1 b bis in den Bereich des Substrats 1. Zur Vermeidung eines Kurzschlusses mit dem Substrat 1 befindet sich unter den Leiterbahnen 2a, 2b im Bereich des Substrats 1 eine elektrische Isolationsschicht zwischen den Leiterbahnen 2a, 2b und dem Substrat 1. Ebenfalls vorgesehen ist die Isolationsschicht I zwischen den Leiterbahnen 2a, 2b und den Balken 1 a, 1 b bis auf einen jeweiligen Kontaktbereich K, wo die Leiterbahnen 2a, 2b die Balken 1 a, 1 b elektrisch kontaktieren. Diese Isolationsschicht I ist insbesondere in Fig. 2b und 2c verdeutlicht.

Die Messeinrichtungen M1 bzw. M2 sind über Leitungsbereiche L1, L2 und einen Kontakt K1 einerseits mit dem Substrat und andererseits über Leitungen L3 bzw. L4 und Kontakte K3 bzw. Kontakte K4 mit den Leiterbahnen 2a, 2b verbunden.

Obwohl bei diesem Ausführungsbeispiel eine separate Auswertung der Widerstandsänderungen der Widerstände R1 a, R1 b der piezoresistiven Balken 1 a, 1 b vorgesehen ist, können die Balken 1 a, 1 b auch gemeinsam ausgewertet werden, beispielsweise in einer Halbbrückenschaltung analog Fig. 6, wie oben erläutert. Auch ist es möglich, lediglich einen einzigen piezoresistiven Balken vorzusehen, wenn die notwendigen Stabilitätskriterien dadurch erfüllt werden können.

Ferner ist es möglich, mehrere Rückführungen auf einem einzelnen piezoresistiven Balken vorzusehen, welche separat ausgewertet werden.

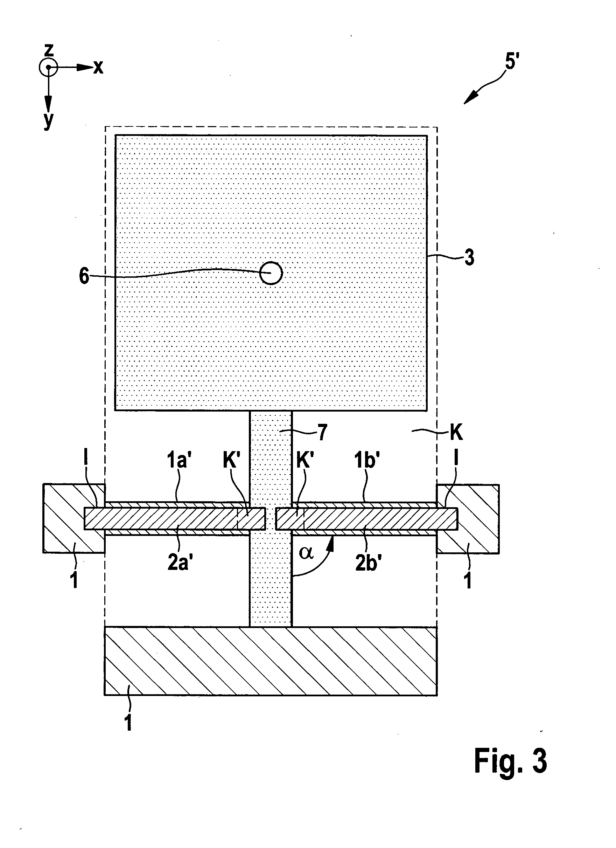

Fig. 3 ist eine Draufsicht eines piezoresistiven mikromechanischen Sensorbauelements in Form einer mikromechanischen Beschleunigungssensoranordnung 5 ' gemäß einer zweiten Ausführungsform der vorliegenden Erfindung.

Bei der in Fig. 3 gezeigten zweiten Ausführungsform ist ein undotierter Biegebalken 7 vorgesehen, der die seismische Masse 3 mit dem Substrat 1 verbindet. Hier sind die homogen dotierten piezoresistiven Balken 1 a', 1 b' nicht zwischen dem Substrat 1 und der seismischen Masse 3 vorgesehen, sondern zwischen dem Substrat 1 und diesem Biegebalken 7. Eine derartige Ausgestaltung, wobei die piezoresistiven Balken 1a', 1 b' unter einem Winkel α (hier: 90°) zu dem Biegebalken 7 angebracht sind, ermöglicht eine höhere Geometriefreiheit, beispielsweise eine veränderte Länge der Balken 1a, 1 b bei gleichbleibendem Abstand zwischen dem Schwerpunkt 6 der seismischen Masse 3 und dem Aufhängungspunkt am Substrat 1 (Hebelarmlänge).

Selbstverständlich ist der Winkel α nicht auf 90° beschränkt, sondern kann frei variiert werden. Auch müssen die Balken 1a', 1 b' nicht denselben Winkel α ausweisen.

Die auf den piezoresistiven Balken 1a', 1 b' vorgesehenen Leiterbahnen 2a', 2b' sind genauso wie bei der ersten Ausführungsform gemäß Fig. 1 strukturiert und ermöglichen die bereits im Zusammenhang mit Fig. 1 beschriebene Auswertung der Widerstandsänderung der piezoresistiven Balken 1a', 1 b'. Wie beim ersten Beispiel ist die Isolationsschicht I vorgesehen zwischen den Leiterbahnen 2a', 2b' und den Balken 1a', 1b' bzw. dem Substrat 1 bis auf einen jeweiligen Kontaktbereich K', wo die Leiterbahnen 2a', 2b' die Balken 1a', 1b' elektrisch kontaktieren.

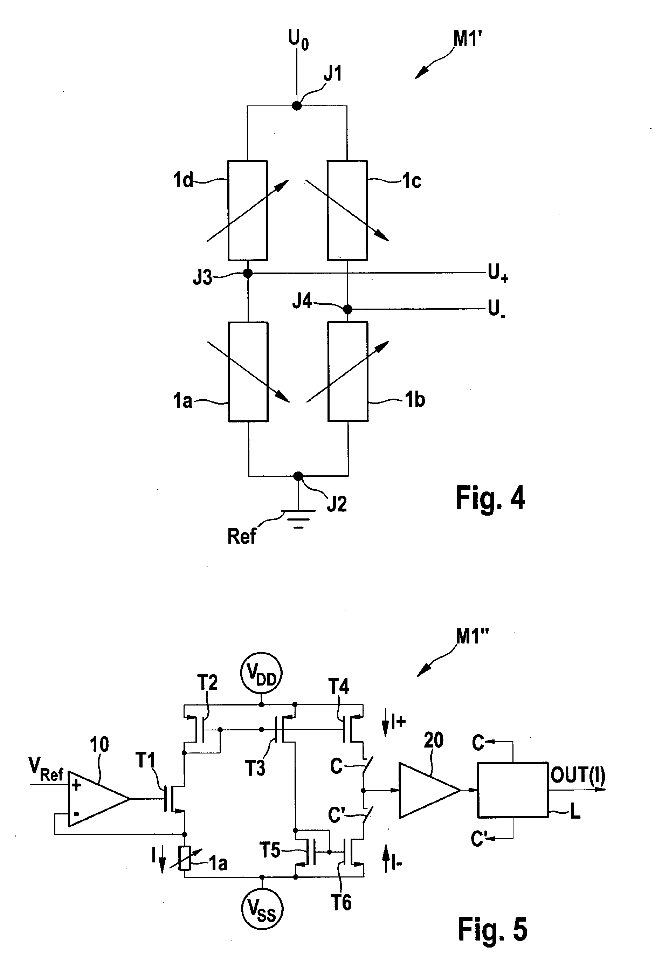

Fig. 4 ist eine erste Messeinrichtung zur Erläuterung einer ersten Ausführungsform eines Messverfahrens unter Verwendung des erfindungsgemäßen piezoresistiven mikromechanischen Sensorbauelements.

Die in Fig. 4 dargestellte Messeinrichtung M1' beruht auf einer Vollbrückenverschaltung von vier piezoresistiven Balken 1 a, 1 b, 1 c, 1 d, welche über Verbindungsknoten J 1, J2, J3, J4 paarweise parallel zwischen ein Versorgungspotential U₀ und ein Referenzpotential REF geschaltet sind. Der Abgriff zur Erfassung der Widerstandsänderung erfolgt an den Verbindungsknoten J3, J4 und liefert bekannterweise Spannungswerte U₊ und U., welche ein direktes Maß für die Widerstandsänderung bei Auslenkung der seismischen Masse 3 sind.

Die vier piezoresistiven Balken 1 a, 1b, 1 c, 1d können entweder an einer einzigen seismischen Masse 3 vorgesehen sein, oder aber über zwei nebeneinander liegende Beschleunigungssensoren realisiert werden, wobei gegebenenfalls auch die zugehörigen beiden seismischen Massen mechanisch miteinander gekoppelt werden können.

Fig. 5 ist eine zweite Messeinrichtung zur Erläuterung einer zweiten Ausführungsform eines Messverfahrens unter Verwendung des erfindungsgemäßen piezoresistiven mikromechanischen Sensorbauelements.

Bei der in Fig. 5 gezeigten Messeinrichtung M1" handelt es sich um eine Stromspiegelschaltungsanordnung mit Sigma-Delta-Modulation. Ein Differenzverstärker 10, an den eine Referenzspannung V_{REF} angelegt ist, sorgt dafür, dass die über dem piezoresistiven Balken 1a abfallende Spannung stets gleich der Referenzspannung V_{REF} ist. Dies geschieht durch entsprechende Ansteuerung eines Transistors T1, welcher zusammen mit einem weiteren Transistor T2 in Serie zum piezoresistiven Balken 1a geschaltet ist. Der Stromfluss I durch den piezoresistiven Balken 1a erfolgt ausgehend von einer Versorgungsspannungsquelle V_{BD} über den Transistor T2 und den Transistor T1 durch den piezoresistiven Balken 1a zu einer Bezugsspannungsquelle V_{SS} (üblicherweise Massepotential). Der in diesem Zweig auftretende Strom ändert sich mit der Widerstandsänderung des piezoresistiven Balkens 1a aufgrund der Auslenkung der mit ihm verbundenen seismischen Masse 3.

Einen weiteren Zweig bilden die in Reihe geschalteten Transistoren T3, T5 und die in Reihe geschalteten Transistoren T4 und T6, wobei diese jeweils als Stromspiegel geschaltet sind, sodass ein positiver Stromwert I⁺, der durch den piezoresistiven Balken 1a fließt, durch den Transistor T4 fließt und ein negativer Strom I⁻, der durch den piezoresistiven Balken 1 a fließt, durch den Transistor T6 fließt, wenn ein jeweiliger zugehöriger steuerbarer Schalter C bzw. C' geschlossen ist.

Eine Logikeinrichtung L steuert alternierend das Schließen der Schalter C, C', wobei beim Schließen ein jeweiliger Stromfluss in einem Integrator 20 aufintegriert wird, dessen Mittelwert null ist. Das Tastverhältnis der Schalter C, C' repräsentiert dann den durch den piezoresistiven Balken fließenden Strom I, welcher als Ausgangssignal OUT(I) von der Messeinrichtung M1" geliefert wird.

Obwohl die vorliegende Erfindung vorstehend anhand bevorzugter Ausführungsbeispiele erläutert worden ist, ist sie nicht darauf beschränkt, sondern auch in anderer Weise ausführbar.

Bei beiden Ausführungsbeispielen sind die Leiterbahnen 1 a, 1 b bzw. 1 a', 1 b' aus einer Metallschicht strukturiert. Allerdings ist es durchaus möglich, diese Balken auch durch hochdotierte Halbleiterschichten oder sonstige Leiterbahnschichten zu bilden.

Obwohl die vorliegende Erfindung in Bezug auf piezoresistive mikromechanische Beschleunigungssensoren erläutert wurde, ist sie darauf nicht beschränkt, sondern auch für andere piezoresistive mikromechanische Bauelemente anwendbar, wie z. B. Drehratensensoren, Drucksensoren, usw.

Neben dem dargestellten Beschleunigungssensor mit Erfassungsrichtung in der x-y-Ebene kann das erfindungsgemäße piezoresistive mikromechanische Sensorbauelement auch zur Detektion in z-Richtung verwendet werden. Dabei stellt die Leiterbahn 2a, 2b eine unsymmetrische Versteifung dar, die bei einer einwirkenden z-Beschleunigung zu einer homogenen mechanischen Spannung in den Balken 1a, 1b führt. In diesem Fall ist die mechanische Spannung in den Balken 1 a, 1b gleichgerichtet. Dadurch lässt sich ein z-Beschleunigungssensor mit nur einem Balken und einer metallischen Leiterbahn zur Rückführung realisieren.

Prinzipiell lässt sich sogar ein xyz- Sensorbauelement durch eine oder mehrere seitliche und eine oder mehrere ober- und/oder unterseitige Leiterbahnen realisieren.

## Patentansprüche

1. Piezoresistives mikromechanisches Sensorbauelement mit:
einem Substrat (1);
einer am Substrat (1) auslenkbar aufgehängten seismischen Masse (3);
mindestens einem zwischen dem Substrat (1) und der seismischen Masse (3) vorgesehenen homogen dotiertem piezoresistiven Balken (1a, 1b; 1a', 1b'), der bei einer Auslenkung der seismischen Masse (3) einer Widerstandsänderung unterliegt;
wobei der homogen dotierte piezoresistive Balken (1a, 1b; 1a', 1 b') eine seitliche und/oder ober- und/oder unterseitige Leiterbahn (2a, 2b; 2a', 2b') aufweist, welche den homogen dotierten piezoresistiven Balken (1a, 1b; 1a', 1b') zumindest teilweise überdeckt und welche sich bis in den Bereich des Substrats (1) erstreckt; und
einer Messeinrichtung (M1; M2; M1'; M1"), welche an das Substrat (1) und an die Leiterbahn (2a, 2b; 2a', 2b') elektrisch angeschlossen ist und zum Messen der Widerstandsänderung über einen Schaltungspfad, der vom Substrat (1) durch den homogen dotierten piezoresistiven Balken (1a, 1 b; 1a', 1b') und vom homogen dotierten piezoresistiven Balken (1 a, 1b; 1a', 1 b') durch die seitliche und/oder ober- und/oder unterseitige Leiterbahn (2a, 2b; 2a', 2b') verläuft, ausgestaltet ist.

2. Sensorbauelement nach Anspruch 1, wobei die seismische Masse (3) über den piezoresistiven Balken (1a, 1b; 1 a', 1b') am Substrat (1) aufgehängt ist.

3. Sensorbauelement nach Anspruch 1, wobei die seismische Masse (3) über einen Verbindungsbalken (7) am Substrat (1) aufgehängt ist und der piezoresistive Balken (1a, 1 b; 1a', 1b') zwischen dem Verbindungsbalken (7) und dem Substrat (1) vorgesehen ist.

4. Sensorbauelement nach einem der Ansprüche 1 bis 3, wobei zwischen dem sich in den Bereich des Substrats (1) erstreckenden Bereich der Leiterbahn (2a, 2b; 2a', 2b') und dem Substrat (1) eine elektrische Isolationsschicht (I) vorgesehen ist.

5. Sensorbauelement nach einem der vorhergehenden Ansprüche, wobei zwischen dem Substrat (1) und der seismischen Masse (3) mehrere piezoresistive Balken (1a, 1 b; 1a', 1 b') vorgesehen sind, die jeweils eine oberseitige Leiterbahn (2a, 2b; 2a', 2b') aufweisen, welche den zugehörigen piezoresistiven Balken (1a, 1b; 1a', 1b') zumindest teilweise überdeckt und welche sich bis in den Bereich des Substrats (1) erstreckt, wobei die Messeinrichtung (M1; M2; M1'; M1"), welche an das Substrat (1) und an die Leiterbahnen (2a, 2b; 2a', 2b') elektrisch angeschlossen ist zum Messen der Widerstandsänderung über einen jeweiligen Schaltungspfad, der vorn Substrat (1) durch den jeweiligen piezoresistiven Balken (1 a, 1 b; 1a', 1 b') und vom jeweiligen piezoresistiven Balken (1a, 1b; 1a', 1 b') durch die zugehörige oberseitige Leiterbahn (2a, 2b; 2a', 2b') verläuft, ausgestaltet ist.

6. Sensorbauelement nach Anspruch 5, wobei die Messeinrichtung (M1; M2; M1'; M1") derart ausgestaltet ist, dass sie die Widerstandsänderungen der mehreren piezoresistiven Balken (1a, 1b; 1a', 1b') separat auswertet.

7. Sensorbauelement nach Anspruch 5, wobei die Messeinrichtung (M1; M2; M1'; M1") derart gestaltet ist, dass sie die Widerstandsänderungen der mehreren piezoresistiven Balken (1a, 1b; 1a', 1b') kombiniert in einer Halbbrückenschaltungsanordnung oder einer Vollbrückenschaltungsanordnung (M1') auswertet.

8. Sensorbauelement nach einem der vorhergehenden Ansprüche, wobei die Messeinrichtung (M1; M2; M1'; M1") derart gestaltet ist, dass sie die Widerstandsänderung des oder der piezoresistiven Balken (1a, 1b; 1a', 1b') in einer Stromspiegelschaltungsanordnung (M1 ") mit Sigma-Delta-Modulation auswertet.

9. Sensorbauelement nach einem der vorhergehenden Ansprüche, wobei das Substrat (1) einen Graben (11a) zur galvanischen Trennung des Schaltungspfades durch zwei benachbarte piezoresistive Balken (1a, 1b; 1a', 1b') aufweist.

10. Sensorbauelement nach einem der vorhergehenden Ansprüche, wobei die Leiterbahn (2a, 2b; 2a', 2b') eine aus einer Metallisierungsschicht strukturierte MetallLeiterbahn ist.

11. Sensorbauelement nach einem der vorhergehenden Ansprüche, wobei mehrere gekoppelte seismische Massen (3) vorgesehen sind.

12. Messverfahren zum Ermitteln von Auslenkungen einer an einem Substrat (1) auslenkbar aufgehängten seismischen Masse (3) über Widerstandsänderungen eines zwischen dem Substrat (1) und der seismischen Masse (3) vorgesehenen homogen dotierten piezoresistiven Balkens (1 a, 1 b; 1 a', 1 b'), der bei den Auslenkungen der seismischen Masse (3) den Widerstandsänderungen unterliegt, mit den Schritten:
Anlegen eines Schaltungspfades, der vom Substrat (1) durch den homogen dotierten piezoresistiven Balken (1a, 1b; 1a', 1b') und vom homogen dotierten piezoresistiven Balken (1a, 1b; 1a', 1b') durch eine seitliche und/oder ober- und/oder unterseitige Leiterbahn (2a, 2b; 2a', 2b') verläuft, welche den homogen dotierten piezoresistiven Balken (1 a, 1b; 1 a', 1 b') zumindest teilweise überdeckt und welche sich bis in den Bereich des Substrats (1) erstreckt; und
Auswerten von den Widerstandsänderungen über eine mit dem Schaltungspfad verbundene Messeinrichtung (M1; M2; M1'; M1") zum Ermitteln der Auslenkungen der seismischen Masse (3).

13. Messverfahren nach Anspruch 12, wobei die Widerstandsänderungen mehrerer zwischen dem Substrat (1) und der seismischen Masse (3) vorgesehener piezoresistiver Balken (1a, 1b; 1a', 1b') über die Messeinrichtung (M1; M2; M1'; M1") separat ausgewertet wird.

14. Messverfahren nach Anspruch 12, wobei die Widerstandsänderungen mehrerer zwischen dem Substrat (1) und der seismischen Masse (3) vorgesehener piezoresistiver Balken (1a, 1b; 1a', 1b') über die Messeinrichtung (M1; M2; M1'; M1") kombiniert in einer Halbbrückenschaltungsanordnung oder einer Vollbrückenschaltungsanordnung (M1') ausgewertet werden.

15. Messverfahren nach Anspruch 12, wobei die Widerstandsänderungen eines oder mehrerer piezoresistive Balken (1a, 1b; 1a', 1b') über die Messeinrichtung (M1; M2; M1'; M1") in einer Stromspiegelschaltungsanordnung (M1") mit Sigma-Delta-Modulation ausgewertet werden.

## Claims

1. Piezoresistive micromechanical sensor component comprising:
a substrate (1);
a seismic mass (3) suspended deflectably from the substrate (1);
at least one homogeneously doped piezoresistive beam (1a, 1b; 1a', 1b'), which is provided between the substrate (1) and the seismic mass (3) and is subject to a resistance change when the seismic mass (3) is deflected;
wherein the homogeneously doped piezoresistive beam (1a, 1b; 1a', 1b') comprises a lateral and/or upper and/or lower conductor track (2a, 2b; 2a', 2b'), which at least partially covers the homogeneously doped piezoresistive beam (1a, 1b; 1a', 1b') and extends into the region of the substrate (1); and
a measuring device (M1; M2; M1'; M1''), which is electrically connected to the substrate (1) and to the conductor track (2a, 2b; 2a', 2b') and is configured to measure the resistance change over a circuit path which extends from the substrate (1) through the homogeneously doped piezoresistive beam (1a, 1b; 1a',
1b') and from the homogeneously doped piezoresistive beam (1a, 1b; 1a', 1b') through the lateral and/or upper and/or lower conductor track (2a, 2b; 2a', 2b').

2. Sensor component according to Claim 1, wherein the seismic mass (3) is suspended from the substrate (1) over the piezoresistive beam (1a, 1b; 1a', 1b').

3. Sensor component according to Claim 1, wherein the seismic mass (3) is suspended from the substrate (1) over a connecting beam (7), and the piezoresistive beam (1a, 1b; 1a', 1b') is provided between the connecting beam (7) and the substrate (1).

4. Sensor component according to one of Claims 1 to 3, wherein an electrical insulation layer (I) is provided between the region of the conductor track (2a, 2b; 2a', 2b'), which extends in the region of the substrate (1), and the substrate (1).

5. Sensor component according to one of the preceding claims, wherein a plurality of piezoresistive beams (1a, 1b; 1a', 1b') are provided between the substrate (1) and the seismic mass (3), each of which has an upper conductor track (2a, 2b; 2a', 2b') which at least partially covers the associated piezoresistive beam (1a, 1b; 1a', 1b') and extends into the region of the substrate (1), wherein the measuring device (M1; M2; M1'; M1''), which is electrically connected to the substrate (1) and to the conductor tracks (2a, 2b; 2a', 2b'), is configured to measure the resistance change over a respective circuit path which extends from the substrate (1) through the respective piezoresistive beam (1a, 1b; 1a', 1b') and from the respective piezoresistive beam (1a, 1b; 1a', 1b') through the associated upper conductor track (2a, 2b; 2a', 2b').

6. Sensor component according to Claim 5, wherein the measuring device (M1; M2; M1'; M1'') is configured so that it evaluates the resistance changes of the plurality of piezoresistive beams (1a, 1b; 1a', 1b') separately.

7. Sensor component according to Claim 5, wherein the measuring device (M1; M2; M1'; M1'') is configured so that it evaluates the resistance changes of the plurality of piezoresistive beams (1a, 1b; 1a', 1b') in combination in a half-bridge circuit arrangement or a full-bridge circuit arrangement (M1').

8. Sensor component according to one of the preceding claims, wherein the measuring device (M1; M2; M1'; M1'') is configured so that it evaluates the resistance change of the piezoresistive beam or beams (1a, 1b; 1a', 1b') in a current mirror circuit arrangement (M1'') with sigma-delta modulation.

9. Sensor component according to one of the preceding claims, wherein the substrate (1) comprises a trench (11a) for DC separation of the circuit path through two neighboring piezoresistive beams (1a, 1b; 1a', 1b').

10. Sensor component according to one of the preceding claims, wherein the conductor track (2a, 2b; 2a', 2b') is a metal conductor track structured from a metallization layer.

11. Sensor component according to one of the preceding claims, wherein a plurality of coupled seismic masses (3) are provided.

12. Measuring method for determining deflections of a seismic mass (3) deflectably suspended from a substrate (1) by means of resistance changes of a homogeneously doped piezoresistive beam (1a, 1b; 1a', 1b'), which is provided between the substrate (1) and the seismic mass (3) and is subject to the resistance changes when the seismic mass (3) is deflected, comprising the steps:
applying a circuit path which extends from the substrate (1) through the homogeneously doped piezoresistive beam (1a, 1b; 1a', 1b') and from the homogeneously doped piezoresistive beam (1a, 1b; 1a', 1b') through a lateral and/or upper and/or lower conductor track (2a, 2b; 2a', 2b'), which at least partially covers the homogeneously doped piezoresistive beam (1a, 1b; 1a', 1b') and extends into the region of the substrate (1); and
evaluating the resistance changes by means of a measuring device (M1; M2; M1'; M1'') connected to the circuit path in order to determine the deflections of the seismic mass (3).

13. Measuring method according to Claim 12, wherein the resistance changes of a plurality of piezoresistive beams (1a, 1b; 1a', 1b') provided between the substrate (1) and the seismic mass (3) are evaluated separately by the measuring device (M1; M2; M1'; M1'').

14. Measuring method according to Claim 12, wherein the resistance changes of a plurality of piezoresistive beams (1a, 1b; 1a', 1b') provided between the substrate (1) and the seismic mass (3) are evaluated in combination by the measuring device (M1; M2; M1'; M1'') in a half-bridge circuit arrangement or a full-bridge circuit arrangement (M1').

15. Measuring method according to Claim 12, wherein the resistance changes of one or a plurality of piezoresistive beams (1a, 1b; 1a', 1b') are evaluated by the measuring device (M1; M2; M1'; M1'') in a current mirror circuit arrangement (M1'') with sigma-delta modulation.

## Revendications

1. Composant micromécanique de capteur piézorésistif comprenant :
un substrat (1),
une masse sismique (3) suspendue sur le substrat (1) de manière à pouvoir être déplacée,
au moins une poutre piézorésistive (1a, 1b; 1a', 1b') dopée de manière homogène, prévue entre le substrat (1) et la masse sismique (3) et subissant une modification de résistance lors d'un déplacement de la masse sismique (3),
la poutre piézorésistive (1a, 1b; 1a', 1b') dopée de manière homogène présentant une piste conductrice (2a, 2b; 2a', 2b') disposée latéralement, sur le côté supérieur et/ou sur le côté inférieur, qui recouvre au moins en partie la poutre piézorésistive (1a, 1b; 1a', 1b') dopée de manière homogène et qui s'étend jusqu' au niveau du substrat (1) et
un dispositif de mesure (M1; M2; M1'; M1'') raccordé électriquement au substrat (1) et à la piste conductrice (2a, 2b; 2a', 2b') et configuré pour mesurer la modification de résistance sur un parcours de branchement qui part du substrat (1) et s'étend du substrat (1) à la poutre piézorésistive (1a, 1b; 1a', 1b') dopée de manière homogène et de la poutre piézorésistive (1a, 1b; 1a', 1b') dopée de manière homogène à la piste conductrice latérale, supérieure et/ou inférieure (2a, 2b; 2a', 2b').

2. Composant de capteur selon la revendication 1, dans lequel la masse sismique (3) est suspendue sur le substrat (1) au-dessus de la poutre piézorésistive (1a, 1b; 1a', 1b').

3. Composant de capteur selon la revendication 1, dans lequel la masse sismique (3) est suspendue sur le substrat (1) au-dessus d'une poutre de liaison (7), la poutre piézorésistive (1a, 1b; 1a', 1b') étant prévue entre la poutre de liaison (7) et le substrat (1).

4. Composant de capteur selon l'une des revendications 1 à 3, dans lequel une couche électriquement isolante (I) est prévue entre la partie de la piste conductrice (2a, 2b; 2a', 2b) qui s'étend au niveau du substrat (1) et le substrat (1).

5. Composant de capteur selon l'une des revendications précédentes, dans lequel plusieurs poutres piézorésistives (1a, 1b; 1a', 1b') sont prévues entre le substrat (1) et la masse sismique (3) et présentent chacune une piste conductrice supérieure (2a, 2b; 2a' , 2b') qui recouvre au moins une partie de la poutre piézorésistive (1a, 1b; 1a', 1b') associée et qui s'étend jusqu'au niveau du substrat (1), le dispositif de mesure (M1; M2; M1'; M1'') raccordé électriquement au substrat (1) et aux pistes conductrices (2a, 2b; 2a', 2b') étant configuré pour mesurer la modification de résistance sur un parcours de raccordement qui relie le substrat (1) à chaque poutre piézorésistive (1a, 1b; 1a', 1b') et chaque poutre piézorésistive (1a, 1b; 1a', 1b') à la piste conductrice supérieure (2a, 2b; 2a', 2b') associée.

6. Composant de capteur selon la revendication 5, dans lequel le dispositif de mesure (M1; M2; M1'; M1'') est configuré de manière à évaluer séparément les modifications de résistance des différentes poutres piézorésistives (1a, 1b; 1a', 1b').

7. Composant de capteur selon la revendication 5, dans lequel le dispositif de mesure (M1; M2; M1'; M1'') est configuré de manière à évaluer les modifications de résistance des différentes poutres piézorésistives (1a, 1b; 1a', 1b') dans un circuit à demi-pont ou un circuit à pont complet (M1').

8. Composant de capteur selon l'une des revendications précédentes, dans lequel le dispositif de mesure (M1; M2; M1'; M1'') est configuré de manière à évaluer la modification de résistance de la ou des poutres piézorésistives (1a, 1b; 1a', 1b') dans un circuit (M1'') à miroir de courant à modulation sigmadelta.

9. Composant de capteur selon l'une des revendications précédentes, dans lequel le substrat (1) présente un sillon (11a) de séparation galvanique du parcours de raccordement qui traverse deux poutres piézorésistives (1a, 1b; 1a', 1b') voisines.

10. Composant de capteur selon l'une des revendications précédentes, dans lequel la piste conductrice (2a, 2b; 2a', 2b') est une piste conductrice métallique structurée dans une couche de métallisation.

11. Composant de capteur selon l'une des revendications précédentes, qui présente plusieurs masses sismiques (3) couplées mutuellement.

12. Procédé de mesure destiné à déterminer des déplacements d'une masse sismique (3) suspendue sur un substrat (1) de manière à pouvoir se déplacer, par des modifications de résistance d'une poutre piézorésistive (1a, 1b; 1a', 1b') dopée de manière homogène, prévue entre le substrat (1) et la masse sismique (3) et subissant des modifications de résistance lors de déplacements de la masse sismique (3), le procédé comportant les étapes qui consistent à :
appliquer un parcours de raccordement qui relie le substrat (1) aux poutres piézorésistives (1a, 1b; 1a', 1b') dopées de manière homogène et la poutre piézorésistive (1a, 1b; 1a', 1b') dopée de manière homogène à une piste conductrice latérale, supérieure et/ou inférieure (2a, 2b; 2a', 2b') qui recouvre au moins une partie de la poutre piézorésistive (1a, 1b; 1a', 1b') dopée de manière homogène et qui s'étend jusqu'au niveau du substrat (1) et
évaluer les modifications de résistance par un dispositif de mesure (M1; M2; M1'; M1'') raccordé au parcours de raccordement, pour déterminer les déplacements de la masse sismique (3).

13. Procédé de mesure selon la revendication 12, dans lequel les modifications de résistance des différentes poutres piézorésistives (1a, 1b; 1a', 1b') sont évaluées séparément au moyen du dispositif de mesure (M1; M2; M1'; M1'').

14. Procédé de mesure selon la revendication 12, dans lequel les modifications de résistance des différentes poutres piézorésistives (1a, 1b; 1a', 1b') prévues entre le substrat (1) et la masse sismique (3) sont évaluées de manière combinée dans un circuit à demi-pont ou un circuit à pont complet (M1') au moyen du dispositif de mesure (M1; M2; M1'; M1'').

15. Procédé de mesure selon la revendication 12, dans lequel les modifications de résistance de la ou des poutres piézorésistives (1a, 1b; 1a', 1b') sont évaluées dans un circuit (M1'') à miroir de courant à modulation sigma-delta au moyen du dispositif de mesure (M1; M2; M1'; M1'').
